Europäisches Patentamt

(19) European Patent Office

Office européen des brevets

(11) Numéro de publication : **0 146 473**
**B1**

(12) **FASCICULE DE BREVET EUROPÉEN**

(45) Date de publication du fascicule du brevet :
16.06.87

(21) Numéro de dépôt : **84402578.3**

(22) Date de dépôt : **13.12.84**

(51) Int. Cl.⁴ : **A 47 J 37/12**, A 47 J 36/38,
F 24 C 15/04

(54) **Hublot pour appareil ménager de cuisson avec dispositif anti-buée.**

(30) Priorité : **14.12.83 FR 8320003**

(43) Date de publication de la demande :
**26.06.85 Bulletin 85/26**

(45) Mention de la délivrance du brevet :
**16.06.87 Bulletin 87/25**

(84) Etats contractants désignés :
**BE CH DE GB LI**

(56) Documents cités :
**DE-B- 1 019 451**
**FR-A- 1 273 751**
**FR-A- 1 570 914**
**GB-A- 2 119 635**

(73) Titulaire : **SEB S.A.**
**F-21260 Selongey (FR)**

(72) Inventeur : **Beugnot, Bernard**
**3 rue Frédéric Chopin**
**F-21120 Is-sur-Tille (FR)**

(74) Mandataire : **Bouju, André**
**Cabinet Bouju 38 avenue de la Grande Armée**
**F-75017 Paris (FR)**

## Description

La présente invention concerne un hublot pour appareil ménager de cuisson, tel qu'un four, une cuisinière, une friteuse ou analogue, fixe ou mobile, le hublot pouvant en particulier être incorporé à un couvercle, attenant à un tel appareil.

On sait que dans les appareils ménagers de cuisson, il est courant d'équiper la porte ou le couvercle d'un hublot transparent en verre, ou toute autre matière transparente résistante à la chaleur, pour permettre à l'utilisateur d'observer le déroulement de la cuisson des aliments. Le hublot doit donc permettre tout au long de la cuisson une visibilité convenable à l'intérieur de l'appareil. Or, les projections ou condensations de corps gras et/ou d'eau déposent sur la surface interne du hublot des gouttelettes qui diminuent la visibilité, voire la suppriment complètement. Il est certes possible d'éliminer ces gouttelettes en ouvrant l'appareil et en essuyant la surface interne du hublot. Toutefois, un telle opération provoque une perte d'une partie de la chaleur emmagasinée à l'intérieur de l'appareil et une émission de fumées malodorantes qui peuvent ensuite aller se condenser sur les murs de la cuisine où est installé l'appareil. Une telle manipulation est d'ailleurs contradictoire avec la tendance actuelle de proposer des appareils équipés de filtres absorbant les émissions de fumées odorantes pour éviter que les odeurs se répandent à l'extérieur de l'appareil pendant la cuisson, ce qui suppose naturellement que l'on n'ait pas à ouvrir la porte ou le couvercle de l'appareil.

Une solution connue, pour les appareils pourvus d'un hublot disposé dans un couvercle monté sur leur partie supérieure, consiste à disposer le hublot obliquement par rapport au plan du couvercle pour éviter le stationnement de l'eau de condensation. Mais seules les gouttes d'eau suffisamment grosses s'écoulent par gravité ; les gouttelettes fines et les gouttes de corps gras restent fixées sur la face interne du couvercle, les forces qu'elles subissent du fait de la tension superficielle du liquide étant supérieures à celle qui résulte de la gravité.

Une autre solution connue (GB-A-2 119 635) consiste à réaliser un hublot à double paroi. La paroi transparente qui se trouve du côté interne de l'appareil de cuisson est montée de façon étanche dans le couvercle et est recouverte par un volet mobile écarté de cette paroi de sorte que cette dernière est isolée de l'ambiance extérieure par une couche d'air emprisonnée entre elle et le volet. Après un certain temps de fonctionnement, la paroi interne se trouve donc portée à une température voisine de celle des vapeurs de cuisson, ce qui supprime la buée résultant de la condensation initiale. Toutefois, malgré l'isolation de la paroi interne ainsi réalisée, la montée en température de celle-ci est longue, ce qui retarde d'autant la disparition de la condensation et la possibilité de surveiller l'avance de la cuisson.

Pour réduire ce retard, on a réalisé des appareils dans lesquels une communication existe entre l'intérieur de l'appareil et l'espace compris entre le hublot et le volet mobile. Ainsi, le document DE-B-1.019.451 décrit une porte de four comportant deux ouvertures dans la paroi qui supporte le hublot, ces ouvertures étant équipées de clapets et étant disposées l'une en haut l'autre en bas de la porte du four. Lorsque le volet mobile est fermé, des tiges solidaires du volet ouvrent les clapets et une circulation d'air chaud s'établit par convection. Lorsque le volet mobile est ouvert, les clapets se referment. Ce dispositif n'est pas satisfaisant en raison de la faible circulation que peut induire la convection d'autant plus que ce mouvement est freiné par les clapets même lorsqu'ils sont en position ouverte.

La présente invention vise à pallier les inconvénients énumérés ci-dessus et en créant un hublot pour appareil de cuisson comportant des moyens particulièrement simples pour éviter la condensation sur sa paroi transparente.

Pour cela, on prévoit un hublot pour appareil ménager de cuisson comportant une plaque transparente montée dans une paroi de l'appareil et recouverte d'un volet mobile écarté de la plaque transparente pour réaliser un espace entre eux, et un passage de communication entre l'intérieur de l'appareil de cuisson et l'espace compris entre la plaque transparente et le volet, caractérisé en ce que le passage de communication est une dérivation d'un conduit d'échappement entre l'intérieur et l'extérieur de l'appareil de cuisson. Ainsi, au moment de l'ouverture du volet mobile, c'est-à-dire au moment où la face externe du hublot risque d'être soumise au contact de l'air extérieur plus froid, cette face externe est balayée par un courant de gaz chaud provenant de l'intérieur de l'appareil.

Selon une version avantageuse de l'invention, des moyens filtrants sont disposés dans le passage de communication.

Ainsi, les vapeurs chaudes se déplaçant dans l'espace compris entre la plaque transparente et le volet sont propres et un faible entretien de cet espace est suffisant pour le maintenir propre. D'autres caractéristiques et avantages de l'invention apparaîtront encore à la lecture de la description ci-après d'un exemple non limitatif en référence aux dessins annexés dans lesquels :

la figure 1 est une vue de dessus d'un couvercle de friteuse équipé d'un hublot selon l'invention,

la figure 2 est une vue agrandie de la partie de la figure 1 comprenant le hublot,

la figure 3 est une vue en coupe selon le plan III-III de la figure 2,

la figure 4 est une vue en coupe selon le plan IV-IV de la figure 2.

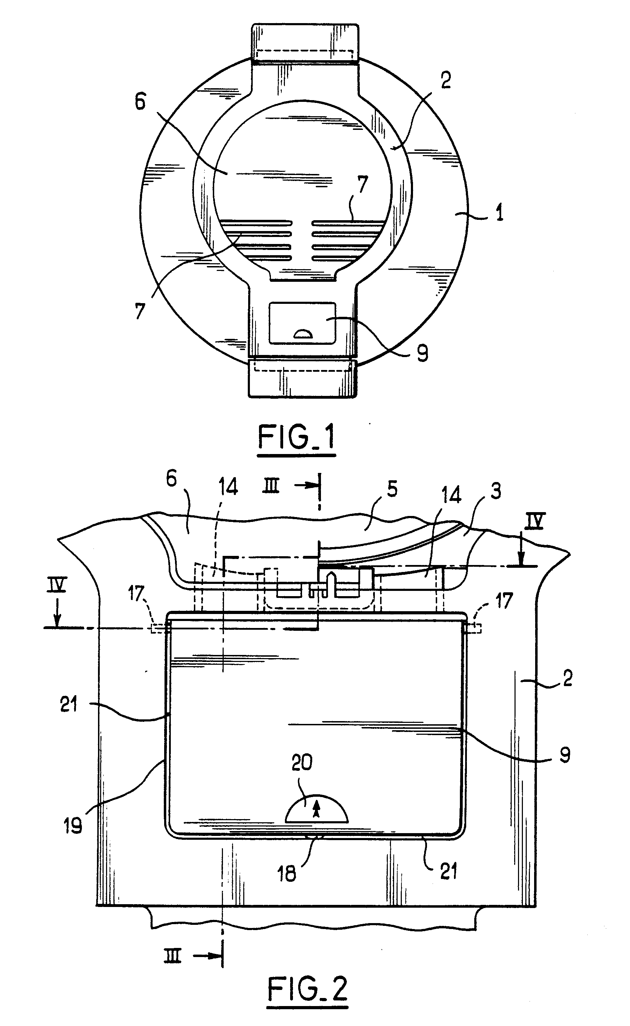

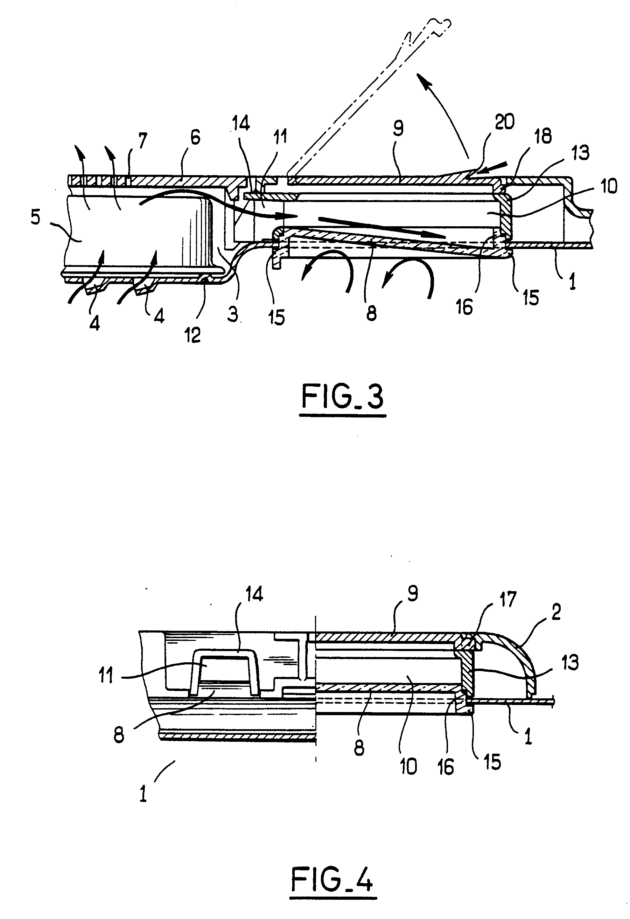

On a représenté sur les figures la paroi d'un appareil ménager de cuisson, ici le couvercle 1 d'une friteuse équipée d'un hublot selon l'invention. Le couvercle 1 comporte à sa partie supérieure un cadre 2 réalisant un compartiment 3 en communication avec l'intérieur de la friteuse par des fentes 4 et contenant un filtre 5 maintenu en place par un clapet 6 amovible présentant des lumières 7 (voir figures 1 et 3).

A côté du compartiment contenant la cartouche filtrante 5, le cadre 2 enserre également un hublot comportant une plaque transparente 8 montée dans une ouverture du couvercle 1 et recouverte d'un volet mobile 9 écarté de la paroi transparente pour réaliser un espace 10 entre eux. Une dérivation 11 est réalisée entre l'espace 10 et le compartiment 3 formant un conduit d'échappement entre l'intérieur et l'extérieur de l'appareil de cuisson de sorte que par l'intermédiaire du compartiment 3 et de la dérivation 11 on obtient un passage de communication entre l'intérieur de l'appareil de cuisson et l'espace 10 compris entre la plaque transparente 8 et le volet 9 (voir figures 3 et 4).

Dans sa partie constituant la paroi inférieure du compartiment 3, le couvercle 1 comprend une nervure circulaire 12 dirigée vers l'intérieur du compartiment 3 et constituant un rebord d'étanchéité en liaison avec la face inférieure de la cartouche filtrante 5. Par ailleurs, le clapet 6 est maintenu légèrement écarté de la face supérieure de la cartouche 5 au moyen de ressorts à lame ou de bossages (non représentés) fixés sur la face inférieure du clapet 6 et s'appuyant sur la face supérieure de la cartouche 5, de sorte que les vapeurs en provenance de l'intérieur de la friteuse et ayant traversé la cartouche filtrante 5 peuvent s'échapper en partie sur le côté de la cartouche filtrante vers la dérivation 11 et la cartouche filtrante 5 constitue ainsi des moyens filtrants disposés dans le passage de communication entre l'intérieur de l'appareil de cuisson et l'espace 10, en amont de la dérivation 11.

Selon la réalisation représentée, l'espace 10 entre la plaque transparente 8 et le volet 9 est entouré d'une paroi latérale 13 présentant des ouvertures en forme de tuyères 14 tournées vers le conduit d'échappement constitué par le compartiment 3. La plaque transparente comporte un rebord 15 prenant appui sur la face interne du couvercle 1 et une jupe 16 s'étendant vers l'extérieur de l'appareil et coopérant avec la paroi latérale 13 de l'espace 10 entre la plaque transparente 8 et le volet 9. La plaque transparente 8 et la paroi latérale 13 sont réalisées dans des matériaux soudables entre eux, par exemple en polysulfone qui est soudable par ultra-sons, et sont ainsi rendus solidaires l'un de l'autre lors du montage.

Le volet 9 est articulé le long d'un de ses bords au moyen de deux tenons 17 s'engageant dans des alvéoles correspondantes du cadre 2. Le volet 9 est réalisé en un matériau flexible et comporte sur son bord opposé au bord articulé un ergot de blocage 18 coopérant avec le bord d'une ouverture 19 dans le cadre 1. De plus, à sa partie supérieure, le volet 9 comporte une encoche 20 dont l'ouverture est dirigée vers l'ergot 18.

Dans la réalisation préférée de l'invention, un léger jeu 21 est prévu entre le bord du volet 9 et le bord de l'ouverture 19.

Le fonctionnement du dispositif est le suivant : au début de la cuisson, le couvercle de la friteuse est fermé et le volet 9 est également fermé avec l'ergot 18 engagé sous le rebord de l'ouverture 19 dans le cadre 2 et s'appuyant sur le bord supérieur de la paroi latérale 13. Dès le début de la cuisson, les vapeurs chaudes sont poussées à travers les fentes 4 par la pression différentielle existant entre l'intérieur du récipient et l'extérieur ; ces vapeurs traversent la cartouche filtrante 5 et s'échappent en majorité par les lumières 7. Les lumières 7 constituent toutefois une résistance à l'échappement des vapeurs de sorte qu'une partie de celles-ci se dirige vers la dérivation 11 et entre dans l'espace 10 où elle vient réchauffer la surface supérieure de la plaque transparente 8, tandis que la face inférieure de cette plaque transparente 8 est réchauffée par la vapeur contenue à l'intérieur du récipient.

Ainsi, la plaque 8 se trouve réchauffée simultanément sur ses deux faces et atteint rapidement une température à laquelle la vapeur d'eau formée lors de la cuisson dans le récipient ne peut plus se condenser sur la plaque 8.

Lorsque l'utilisateur souhaite vérifier le degré de cuisson des aliments contenus dans l'appareil, il ouvre le volet 9 en engageant un ongle dans l'encoche 20, puis en poussant sur celle-ci pour dégager l'ergot 18 ce qui permet de relever le volet 9 dans la position représentée en traits mixtes sur la figure 3. Dans cette position, l'utilisateur peut observer les aliments contenus dans l'appareil de cuisson, sans qu'une condensation se produise sur la plaque 8, le contact de l'air ambiant étant alors généralement insuffisant pour réduire la température de cette plaque d'une valeur telle que la condensation ait lieu sur celle-ci, d'autant plus que des vapeurs chaudes filtrées continuent à arriver par la dérivation 11 et à s'écouler sur la face supérieure de la plaque transparente 8.

On notera que la dimension des ouvertures 14 formant la dérivation 11 doit de préférence être assez importante pour permettre un écoulement de vapeurs chaudes suffisant pour réchauffer la plaque 8, mais ne pas non plus être trop importante, afin que ces vapeurs, qui contiennent de la vapeur d'eau, ne viennent pas gêner l'observation de l'utilisateur lorsque celui-ci ouvre le volet 9.

En raison du jeu 21 qui existe entre le bord du volet 9 et le bord de l'ouverture 19 dans le cadre 2, les vapeurs chaudes contenues dans l'espace 10 peuvent en partie s'échapper vers l'extérieur de l'appareil, même lorsque le volet 9 est refermé et les gaz emprisonnés dans l'espace 10 se trouvent ainsi renouvelés de sorte que cet espace est maintenu à une température élevée, favorisant le maintien en température de la plaque transparente 8.

La présente invention n'est pas limitée au mode de réalisation décrit ci-dessus et on peut y apporter des variantes d'exécution.

Ainsi, il n'est pas indispensable pour l'invention de faire passer les gaz venant réchauffer l'espace 10 dans une cartouche filtrante. Dans ce cas, les particules de graisse portées par les gaz chauds viendront se déposer sur la face extérieure de la plaque transparente 8 et l'utilisateur devra donc prévoir un nettoyage périodique de cette surface, en dehors des périodes d'utilisation pour la cuisson.

On peut également faire varier la forme du hublot et fixer celui-ci sur le couvercle ou sur la paroi de l'appareil ménager par des moyens très divers. Le volet 9 peut être réalisé de façon coulissante au lieu d'être monté basculant comme sur la réalisation représentée et on peut prévoir de supprimer l'ergot 18, le volet 9 étant alors refermé par son propre poids.

Selon une variante de réalisation, le volet 9 est réalisé en un matériau transparent de sorte que, dans certaines conditions, l'utilisateur peut constater l'état de cuisson des aliments sans ouvrir le volet 9. Par ailleurs, dans la réalisation représentée, la plaque transparente 8 est inclinée de façon à favoriser un écoulement des projections résultant de la cuisson sur la face interne de la plaque transparente. Cette disposition améliore la vision, mais n'est pas indispensable, la disparition de la buée étant en soi suffisante pour permettre une bonne vision des aliments en cours de cuisson.

Selon une autre variante de réalisation, on prévoit des tuyères d'évacuation dans un côté de la paroi latérale adjacent ou de préférence opposé à celui qui contient les tuyères 14. Ces tuyères d'évacuation, associées à des ouvertures dans le cadre 2 permettent un échappement de vapeur plus important qu'à travers le jeu 21 et favorisent donc une circulation de vapeur chaude dans l'espace 10.

## Revendications

1. Hublot pour appareil ménager de cuisson comportant une plaque transparente (8) montée dans une paroi (11) de l'appareil et recouverte d'un volet (9) mobile écarté de la plaque transparente pour réaliser un espace (10) entre eux, et un passage (4, 3, 11) de communication entre l'intérieur de l'appareil de cuisson et l'espace (10) compris entre la plaque transparente (8) et le volet (9), caractérisé en ce que le passage de communication est une dérivation (11) d'un conduit d'échappement (3) entre l'intérieur et l'extérieur de l'appareil de cuisson.

2. Hublot conforme à la revendication 1, caractérisé en ce qu'il comporte des moyens de communication (21) de l'espace (10) compris entre la plaque transparente (8) et le volet (9) avec l'extérieur.

3. Hublot conforme à la revendication 1 ou la revendication 2, caractérisé en ce que des moyens filtrants (5) sont disposés dans le passage de communication.

4. Hublot conforme à la revendication 3, caractérisé en ce que les moyens filtrants (5) sont disposés dans le conduit d'échappement (3) en amont de la dérivation (11).

5. Hublot conforme à l'une des revendications 1 à 4, caractérisé en ce que l'espace (10) entre la plaque transparente (8) et le volet (9) est entouré d'une paroi latérale (13) présentant des ouvertures (14) tournées vers le conduit d'échappement (3).

6. Hublot conforme à la revendication 5, caractérisé en ce que la plaque transparente (8) et la paroi latérale (13) sont réalisées dans des matériaux soudables entre eux.

7. Hublot conforme à la revendication 5 ou à la revendication 6, caractérisé en ce que la plaque transparente (8) comporte un rebord (15) prenant appui sur la face interne de la paroi (1) de l'appareil de cuisson et une jupe (16) s'étendant vers l'extérieur de l'appareil et coopérant avec la paroi latérale (13) de l'espace (10) entre la plaque transparente (8) et le volet (9).

8. Hublot conforme à l'une quelconque des revendications 1 à 7, caractérisé en ce que le volet (9) est articulé le long d'un de ses bords sur la paroi de l'appareil, en ce qu'il est réalisé en un matériau flexible, et en ce qu'il comporte un ergot (18) de blocage sur son bord opposé au bord articulé.

9. Hublot conforme à l'une quelconque des revendications 1 à 8, caractérisé en ce que le volet (9) mobile est monté dans la paroi de l'appareil avec un jeu (21).

10. Hublot conforme à l'une quelconque des revendications 1 à 8 caractérisé en ce qu'il est monté dans un couvercle (1) de friteuse.

## Claims

1. A window for a domestic cooker, said window comprising a transparent plate (8) disposed in a wall (11) of the cooker and covered by a moving flap (9) separated from the plate (8) to leave a gap (10) between them, and a communicating passage (4, 3, 11) between the inside of the cooker and the gap (10), characterised in that the communicating passage is a branch (11) from an exhaust duct (3) extending between the inside and outside of the cooker.

2. A window according to claim 1, characterised in that it comprises means (21) enabling the gap (10) to communicate with the exterior.

3. A window according to claim 1 or 2, characterised in that filter means (5) are disposed in the communicating passage.

4. A window according to claim 3, characterised in that the filter means (5) are disposed in the exhaust duct (3) upstream of the branch (11).

5. A window according to any of claims 1-4 characterised in that the gap (10) has around it a lateral wall (13) formed with apertures (14) directed towards the exhaust duct (3).

6. A window according to claim 5, characterised in that the plate (8) and wall (13) are made of materials which can be welded to one another.

7. A window according to claim 5 or 6, characterised in that the plate (8) has edging (15) bearing on the inside surface of the cooker wall and a skirt (16) which extends towards the outside of the cooker and which co-operates with the lateral wall (13) bounding the gap (10).

8. A window according to any of claims 1-7, characterised in that the flap (9) is articulated along one of its edges to the cooker wall, is made of a flexible material and has a locking pin or stud or the like (18) on that of its edges opposite its articulated edge.

9. A window according to any of claims 1-8, characterised in that the flap (9) is disposed in the cooker wall with a clearance (21).

10. A window according to any of claims 1-8 characterised in that it is disposed in a cover (1) of a frier.

**Patentansprüche**

1. Beobachtungsfenster für ein Haushalts-Kochgerät, mit einer lichtdurchlässigen Scheibe (8), die in einer Wand (11) des Gerätes eingebaut und durch eine bewegliche Klappe (9) abgedeckt ist, die von der lichtdurchlässigen Scheibe beabstandet ist, um einen Raum (10) dazwischen zu bilden, und mit einem Verbindungsdurchgang (4, 3, 11) zwischen dem Innenraum des Kochgerätes und dem zwischen der lichtdurchlässigen Scheibe (8) und der Klappe (9) enthaltenen Raum (10), dadurch gekennzeichnet, daß der Verbindungsdurchgang eine Abzweigung (11) einer Ablaßleitung (3) zwischen dem Innenraum und dem Außenraum des Kochgerätes ist.

2. Beobachtungsfenster nach Anspruch 1, dadurch gekennzeichnet, daß es Mittel (21) zur Verbindung des zwischen der lichtdurchlässigen Scheibe (8) und der Klappe (9) enthaltenen Raumes (10) mit der Außenseite umfaßt.

3. Beobachtungsfenster nach Anspruch 1 oder Anspruch 2, dadurch gekennzeichnet, daß Filtermittel (5) in dem Verbindungsdurchgang angeordnet sind.

4. Beobachtungsfenster nach Anspruch 3, dadurch gekennzeichnet, daß die Filtermittel (5) in der Ablaßleitung (3) strömungsaufwärts von der Abzweigung (11) angeordnet sind.

5. Beobachtungsfenster nach einem der Ansprüche 1 bis 4, dadurch gekennzeichnet, daß der Raum (10) zwischen der lichtdurchlässigen Scheibe (8) und der Klappe (9) von einer Seitenwand (13) umgeben ist, die mit Öffnungen (14) versehen ist, welche der Ablaßleitung (3) zugewendet sind.

6. Beobachtungsfenster nach Anspruch 5, dadurch gekennzeichnet, daß die lichtdurchlässige Scheibe (8) und die Seitenwand (13) aus miteinander verschweißbaren Stoffen gebildet sind.

7. Beobachtungsfenster nach Anspruch 5 oder Anspruch 6, dadurch gekennzeichnet, daß die lichtdurchlässige Scheibe (8) einen Rand (15) aufweist, der sich auf der Innenfläche der Wandung (1) des Kochgerätes abstützt, und eine Schürze (16) aufweist, welche sich zur Außenseite des Gerätes erstreckt und mit der Seitenwand (13) des Raumes (10) zwischen der lichtdurchlässigen Scheibe (8) und der Klappe (9) zusammenwirkt.

8. Beobachtungsfenster nach einem der Ansprüche 1 bis 7, dadurch gekennzeichnet, daß die Klappe (9) längs eines ihrer Ränder an der Wandung des Gerätes angelenkt ist, daß sie aus einem flexiblen Material gebildet ist und daß sie einen Blockiernocken (18) an ihrem Rand aufweist, welcher dem angelenkten Rand gegenüberliegt.

9. Beobachtungsfenster nach einem der Ansprüche 1 bis 8, dadurch gekennzeichnet, daß die bewegliche Klappe (9) in der Wandung des Gerätes mit Spiel (21) montiert ist.

10. Beobachtungsfenster nach einem der Ansprüche 1 bis 8, dadurch gekennzeichnet, daß es in einen Deckel (1) eines Frittiergerätes eingebaut ist.

FIG.1

FIG.2

## FIG. 3

## FIG. 4